# FASCICULE DE BREVET EUROPEEN

(11) **EP 2 389 577 B1**
(45) Date de publication et mention de la délivrance du brevet: **18.03.2020**
(21) Numéro de dépôt: 10701665.1
(22) Date de dépôt: 25.01.2010
(51) Int. Cl.: G01N 21/64, G01N 35/00

(54) **SYSTEME D'IMAGERIE PAR BALAYAGE D'UNE SURFACE D'UN ECHANTILLON ET DISPOSITIF DE LECTURE CORRESPONDANT**
BILDGEBUNGSSYSTEM UNTER VERWENDUNG VON PROBENOBERFLÄCHEN-SCANNING SOWIE ENTSPRECHENDES LESEGERÄT
IMAGING SYSTEM USING SAMPLE SURFACE SCANNING, AND CORRESPONDING READING DEVICE

(30) Priorité: 23.01.2009 FR 0900307
(43) Date de publication de la demande: 30.11.2011
(73) Titulaire: Université de Rennes 1, 35065 Rennes Cedex (FR); Zoopole Developpement, 22440 Ploufragan (FR); AFSSA Agence Française Sécurité Sanitaire Aliments, 94700 Maisons Alfort (FR)
(72) Inventeur: GOUJON, Jean-Marc, F-22300 Lannion (FR); GUYADER, Patrick, F-22300 Lanmerin (FR); LE PAGE, Ronan, F-22300 Lannion (FR); BILLON, Michel, F-22300 Lannion (FR); FRAVALLO, Philippe, Saint Hyacinthe J2T 4K6 (FR); SALVAT, Gilles, 22000 Saint-Brieuc (FR); QUEGUINER, Maryline, 22800 Le Foeil (FR); LEBAS, Cédric, 01170 Crozet (FR)
(74) Mandataire: Vidon Brevets & Stratégie
(86) Numéro de dépôt international: PCT/EP2010/050808
(87) Numéro de publication internationale: WO 2010/084193

(56) Documents cités:
- US-A1- 2002 177 144

## Description

### 1. Domaine de l'invention

Le domaine de l'invention est celui de l'imagerie par balayage.

Plus précisément, l'invention concerne l'imagerie par balayage d'une surface d'un échantillon, tel un échantillon biologique, et en particulier, mais non exclusivement, d'un échantillon marqué par fluorescence.

L'invention peut trouver des applications dans de nombreux domaines tels que, par exemple, l'agro-alimentaire, la cosmétique, la pharmaceutique, l'environnement, la chimie des polymères, le contrôle de surface des matériaux.

### 2. Art antérieur

La présence et la maîtrise de bactéries et/ou de micro-organismes indésirables, telles que les salmonelles et listéria, dans des produits alimentaires notamment, est une préoccupation croissante des autorités de sécurité sanitaire des aliments et des industriels.

Des contrôles de qualité sont ainsi mis en œuvre lors de l'abattage des animaux, par exemple dans la filière porcine, pour détecter les carcasses susceptibles de poser des problèmes de santé publique.

Il est ainsi courant que les carcasses des animaux soient contrôlées visuellement, une telle approche restant toutefois peu fiable.

Il est également connu de mettre en œuvre des contrôles bactériologiques, basés sur la bactériologie pure ou sur des méthodes combinées dites « rapides ». Ce type de contrôle reste cependant fastidieux, coûteux et nécessite au moins 48 heures avant la délivrance d'une information représentative du niveau de contamination. Les contrôles bactériologiques nécessitent en outre de disposer d'un laboratoire équipé et de personnels qualifiés.

Par ailleurs, les contrôles utilisant des méthodes moléculaires basées sur l'amplification génique nécessitent une incubation préalable qui retarde d'autant l'obtention d'une information représentative du niveau de contamination.

Enfin, les contrôles sérologiques visent à rechercher et à identifier l'éventuelle présence d'anticorps qui indiquerait la présence de bactéries/micro-organismes susceptibles, au-delà d'un seuil prédéterminé, de rendre la viande animale impropre à la consommation.

L'utilisation de telles méthodes de contrôle est fastidieuse et coûteuse lorsque l'on recherche plusieurs pathogènes à partir d'un même échantillon biologique. En outre, ces méthodes ne sont adaptées que lorsque la contamination sur l'échantillon biologique est importante et homogène.

Dans le cas de prélèvements analysés à l'aide d'un microscope, il est connu d'utiliser des dispositifs de balayage ou de lecture par fluorescence permettant l'analyse par fluorescence de tels prélèvements. Par exemple, le document US2002/0177144 divulgue un tel système d'imagerie par balayage.

La technique de fluorescence consiste à mélanger (ou marquer) un échantillon biologique couplé avec un anticorps avec un réactif le rendant fluorescent (appelé fluorochrome ou fluorophore), c'est-à-dire lui donnant la capacité d'émettre une lumière fluorescente sous l'action d'un rayonnement lumineux.

Le marquage par fluorescence est connu de l'homme du métier et ne sera pas abordé en détail. Une technique particulière de marquage par fluorescence est présenté dans la publication technique « Fravalo P, Chanet JP, Mas M, Huchet E, Queguiner S, Salvat G : Feasability offluorescent detection of pathogens on pork carcasses ; Berl Munch Tierarztl Wochenschr ; 2001 Sep-Oct ; 114(9-10):393-6*.*

Un dispositif de balayage ou de lecture par fluorescence met en œuvre, par exemple, un microscope confocal qui soumet l'échantillon biologique marqué d'un réactif fluorescent à une excitation lumineuse (issue d'une source laser classiquement) et un système de balayage, en général des miroirs oscillants, qui permet de positionner successivement le point de focalisation du faisceau lumineux en différents points de l'échantillon biologique. Un capteur de mesure de la fluorescence (un photomultiplicateur classiquement) détecte la fluorescence émise par l'échantillon biologique en réponse la lumière d'excitation. L'intensité de la fluorescence détectée est convertie en signaux électriques qui peuvent ensuite faire l'objet d'un traitement informatique adapté pour obtenir une image 2D et/ou 3D de l'échantillon biologique et en tirer une information biologiquement pertinente.

Il est nécessaire dans un tel dispositif de lecture par fluorescence de s'assurer que chaque point balayé de la surface de l'échantillon biologique est placé dans le plan focal du faisceau lumineux, malgré les irrégularités de la surface de l'échantillon biologique.

En d'autres termes, il convient de régler en continu, lors du balayage, le point focal du microscope confocal afin de suivre les variations d'épaisseur de l'échantillon biologique. Ceci est particulièrement contraignant dans la mesure où la résolution nécessaire pour une telle application est de l'ordre de quelques micromètres (µm) et que la profondeur de champ est faible.

Il a été proposé de remédier à ce problème en utilisant, dans le microscope confocal, des moyens de focalisation réglables (également appelés moyens d'autofocus), qui permettent d'obtenir la précision voulue.

Les moyens d'autofocus sont toutefois sensibles au matériau support de l'échantillon biologique. En particulier, dans le cas où le support est une lame métallique, les moyens d'autofocus peuvent êtres « éblouis » par la réflexion du laser d'excitation et, par conséquent, peuvent ne pas fonctionner correctement.

Le système de balayage d'un tel dispositif nécessite en outre que l'objectif du microscope confocal et le support de la lame portant l'échantillon biologique soient mobiles, ce qui est relativement complexe et coûteux à mettre en œuvre.

Il est ainsi connu d'utiliser un support rotatif, par exemple un disque CD, sur la surface duquel sont aménagées deux zones concentriques, à savoir une zone de stockage de données, située vers le centre du disque, et une zone de réception de lames marquées par une substance fluorescente, située à l'extérieur du disque. L'imagerie par fluorescence des lames nécessite la mise en rotation du disque par un système d'entraînement et la mise en œuvre de moyens d'autofocus asservis de haute précision qui sont, par nature, relativement coûteux.

Un autre inconvénient lié à l'utilisation de tels disques est que la surface du disque n'est pas toujours parfaitement plane, ce qui peut fausser les mesures de fluorescence et dégrader la qualité de l'image obtenue, par défocalisation notamment.

En outre, lorsque la surface de l'échantillon biologique est irrégulière, il est nécessaire que les moyens d'autofocus soient très rapides, ou que la vitesse de rotation du disque soit relativement faible.

### 3. Objectifs de l'invention

L'invention a notamment pour objectif de pallier au moins certains de ces différents inconvénients de l'état de la technique.

Plus précisément, l'un des objectifs de la présente invention, dans au moins un mode de réalisation, est de fournir un système d'imagerie d'une surface d'au moins un échantillon, et en particulier, mais non exclusivement, d'imagerie par fluorescence d'une surface d'au moins un échantillon biologique, qui soit relativement simple et peu coûteux à fabriquer.

En particulier, l'invention a pour objectif de fournir, dans au moins un mode de réalisation, un système qui permette de détecter de manière fiable et rapide la présence de bactéries et/ou de micro-organismes dans des échantillons biologiques.

Par ailleurs, un objectif complémentaire de l'invention, dans au moins un mode de réalisation, est de fournir un système :
- qui permette une cadence d'analyse d'échantillons élevée ;
- qui présente une résolution de l'ordre de 1 µm (micromètre) ;
- qui permette une acquisition rapide de la fluorescence ;
- qui soit peu encombrant, éventuellement portable, et simple à utiliser ; et/ou
- qui permette la détection d'éléments ponctuels (de taille micrométrique) sporadiquement distribués sur un échantillon.

### 4. Exposé de l'invention

L'invention concerne un système d'imagerie par balayage selon la revendication 1.

Ainsi, l'invention propose un système d'imagerie par balayage d'une surface d'un échantillon, marqué par fluorescence par exemple, qui peut être réalisé à partir d'un lecteur CD ou DVD classique, accessible à faible coût, et qui comprend à l'origine une tête de lecture laser et des moyens d'entrainement en rotation d'un disque CD ou DVD classique.

La précision de l'optique d'un tel lecteur CD/DVD est compatible avec les applications envisagées, en particulier, mais non exclusivement, l'imagerie par fluorescence d'une surface d'au moins un échantillon biologique, marqué par une substance fluorescente, afin de détecter la présence éventuelle de bactéries prédéterminées, sporadiquement distribuées dans ces échantillons.

Dans le système de l'invention, par exemple, des lames supportant chacune un échantillon biologique sont disposées sur une zone d'un disque optique (CD ou DVD par exemple) tel que décrit précédemment comprenant également une zone de stockage de données.

L'invention se propose d'adjoindre à la tête de lecture laser d'origine du lecteur CD/DVD, qui de préférence n'est pas modifiée, une seconde tête de mesure de la fluorescence qui est solidaire de la tête de lecture laser, les deux têtes pouvant être translatées par un même moteur lorsque le disque optique portant les lames à analyser est mis en rotation.

Ainsi donc, dans le système de l'invention, le balayage de la surface des échantillons est mixte, c'est-à-dire que le disque CD/DVD tourne pendant que la tête de lecture laser, qui lit les données stockées sur le disque CD/DVD, et la tête de mesure de la fluorescence, qui balaie la surface des échantillons disposés sur le disque CD/DVD, sont translatées.

La tête de mesure de la fluorescence peut, à l'origine, être identique à la tête de lecture laser, et nécessite dans ce cas d'être modifiée afin d'obtenir l'excitation laser souhaitée. Il est également nécessaire d'y intégrer des moyens de détection de la fluorescence.

Afin que l'image obtenue de la surface de chaque échantillon biologique soit nette, la tête de mesure de la fluorescence comprend des actuateurs de focalisation qui permettent de placer la surface d'un échantillon dans le plan focal du faisceau lumineux d'excitation. Ces actuateurs permettent le déplacement du point focal de la tête de mesure de la fluorescence latéralement (parallèlement à la surface du disque) et selon l'axe focal (perpendiculairement à la surface du disque).

Selon l'invention, les signaux de commande de focalisation (signaux d'asservissement) de la tête de lecture laser sont dupliqués, et éventuellement ajustés, pour commander les actuateurs de focalisation de la tête de mesure de la fluorescence et adapter ainsi le point de focalisation aux déformations (par exemple voilage, ondulations, etc) et aux irrégularités de surface du disque CD/DVD.

En complément des signaux d'asservissement de focalisation (selon l'axe focal), les signaux d'asservissement latéral de la tête de lecture laser sont dupliqués vers la tête de mesure de la fluorescence, pour assurer un pointage latéral identique des deux optiques.

Ainsi, le système de l'invention permet de s'affranchir des moyens d'autofocus coûteux de l'art antérieur, tout en proposant une résolution de l'ordre de 1µm (micromètre).

Le système de l'invention est peu coûteux à mettre en œuvre puisqu'il est fabriqué à partir d'un dispositif existant, accessible à bas coût, et dont la résolution est compatible avec les applications envisagées.

Le système de l'invention permet la détection d'éléments ponctuels (de taille micrométrique dans le cas des bactéries), sporadiquement distribués et présente un niveau de sensibilité satisfaisant sans engendrer de temps de lecture conséquent.

Un tel système est particulièrement adapté au comptage de bactéries qui ne nécessite qu'une dynamique relativement faible.

Un tel système permet en outre la détection simultanée de plusieurs bactéries. Cette analyse simultanée peut être adaptée à la filière concernée selon le pathogène établi ou émergeant qu'on souhaite maîtriser.

Ce système permet, lorsqu'il est utilisé pour la détection de bactéries sur des carcasses d'animaux, de statuer sur un seuil de contamination afin de décider du mode de diffusion (viande fraîche ou cuite) vers le consommateur de la viande animale.

Plus généralement, le système de l'invention permet un gain en qualité des produits dont sont issus les échantillons.

Dans un mode de réalisation particulier du système de l'invention, la première tête de lecture comprend :
- des moyens de génération du premier faisceau lumineux de lecture,
- des premiers moyens optiques déterminant un premier point de focalisation dudit premier faisceau lumineux de lecture,
- et des premiers moyens d'ajustement du premier point de focalisation ; et
- la deuxième tête de détection/mesure comprend :
   - des moyens de génération du deuxième faisceau lumineux d'excitation dudit échantillon ;
   - des seconds moyens optiques déterminant un second point de focalisation dudit deuxième faisceau lumineux d'excitation ;
   - des moyens de détection de la lumière émise par l'échantillon en réponse à l'excitation lumineuse,
   - des moyens de conversion de la lumière détectée en signaux électriques représentatifs d'une image de la surface dudit au moins un échantillon ; et
   - des seconds moyens d'ajustement du second point de focalisation.

Avantageusement, les premiers et seconds moyens d'ajustement permettent d'ajuster la position du premier et du second point de focalisation respectivement selon l'axe focal des premiers et des seconds moyens optiques respectivement.

Selon un aspect particulier, les premiers et seconds moyens d'ajustement permettent en outre d'ajuster la position du premier et du second point de focalisation respectivement dans une direction sensiblement perpendiculaire à l'axe focal des premiers et des seconds moyens optiques respectivement.

L'invention repose sur la duplication des signaux latéraux et de focalisation des actuateurs de la tête de lecture laser du support de stockage, vers une tête de mesure (ou de lecture) de la fluorescence du ou des échantillons.

Dans un mode de réalisation préférentiel de l'invention, la première tête de lecture et la deuxième tête de mesure sont montées sur un support commun mobile en translation suivant une direction sensiblement perpendiculaire à l'axe de rotation du support lorsque le support est entraîné en rotation.

Ainsi, la liaison mécanique des deux têtes permet une fabrication relativement simple et peu coûteuse du système.

Selon un aspect particulier, un film d'épaisseur calibrée est disposé sur la surface supérieure du support de façon à écraser l'échantillon dans le logement à une épaisseur connue par rapport à la surface inférieure du support.

Ainsi, pour s'assurer que la surface des échantillons biologiques déposés sur les lames et la surface de lecture du disque CD/DVD suivent les mêmes déplacements selon l'axe de rotation du disque CD/DVD, on utilise un film d'épaisseur calibrée sur la surface supérieure du support de manière à ce que_ces surfaces sont référencées sur la même surface inférieure du disque CD/DVD. Ce film d'épaisseur calibrée est ajouré aux endroits où la lecture doit avoir lieu. Ainsi, lorsque l'échantillon est pressé contre la surface inférieure du CD/DVD, la quantité excédentaire de préparation biologique est extrudée dans des zones prévues à cet effet, et les zones à analyser possèdent une épaisseur connue.

Dans un mode de réalisation de l'invention, la deuxième tête de détection/mesure est apte à détecter/mesurer la fluorescence émise par au moins un échantillon marqué par une préparation fluorescente en réponse à un faisceau lumineux d'excitation.

Ainsi, le système d'imagerie de l'invention peut être mis en œuvre pour balayer la surface d'un échantillon biologique marqué par une préparation fluorescente (fluorophore).

Dans un autre mode de réalisation de l'invention, le signal de contrôle des premiers moyens d'ajustement du premier faisceau lumineux de la première tête de lecture tient compte d'au moins une information représentative d'au moins un type de défaut du support, tels que des variations d'épaisseur, mémorisées dans la zone de stockage du support. Alternativement, ou en complément, cette information représentative d'au moins un type de défaut du support peut être mesurées au moyen d'un système de mesure de distance placé sur la deuxième tête de lecture.

L'invention utilise un support à être entraîné en rotation autour d'un axe pour être lu par un système d'imagerie par balayage tel que décrit précédemment, comprenant :
- une zone de stockage de données et de guidage ; et
- au moins un logement de réception et de lecture d'un échantillon,

Avantageusement, les données stockées dans la zone correspondante comprennent des données caractérisant l'échantillon.

Selon un aspect particulier données stockées dans la zone de stockage de données comprennent des informations représentatives d'au moins un type de défaut du support, tels que des variations d'épaisseur.

On pourra ainsi pré-caractériser le support, lors de sa fabrication par exemple, et stocker dans la zone de données des informations représentatives de certains types de défauts non évolutifs (variation d'épaisseur du support par exemple).

Ces informations pourront être lues par la tête de lecture et transmises vers la tête de mesure de la fluorescence. Elles peuvent alors servir à adapter l'autofocus de la tête de mesure de la fluorescence

Selon un autre aspect particulier, le logement de réception d'un échantillon comprend au moins un orifice d'expansion.

Ainsi, un orifice ou zone d'expansion peut être prévu dans le logement de réception d'un échantillon pour permette l'extrusion de l'excédent de préparation fluorescente lorsque celle-ci est écrasée à une épaisseur connue définie par le film d'épaisseur calibrée par exemple.

L'invention concerne en outre un dispositif de lecture d'un support tel que défini dans la revendication 8.

### 5. Liste des figures

D'autres caractéristiques et avantages des modes de réalisation de l'invention apparaîtront à la lecture de la description suivante d'un mode de réalisation préférentiel de l'invention, donné à titre d'exemple indicatif et non limitatif (tous les modes de réalisation de l'invention ne sont pas limités aux caractéristiques et avantages de ce mode de réalisation préférentiel), et des dessins annexés, dans lesquels :
- la figure 1 représente une vue d'un support de lames utilisé dans un mode de réalisation de l'invention ;
- la figure 2 représente une vue en coupe du support de lames de la figure 1 ;
- la figure 3 représente un dispositif d'imagerie par fluorescence de lames selon un mode de réalisation de l'invention ;
- la figure 4 représente la tête de mesure de la fluorescence du dispositif de la figure 3 selon un mode de réalisation de l'invention ;
- la figure 5 représente une vue de dessous, en perspective, de la tête de mesure de la fluorescence selon un mode de réalisation de l'invention ;
- la figure 6 représente une vue de dessus, en perspective, de la tête de mesure de la fluorescence de la figure 5.

### 6. Description d'un mode de réalisation de l'invention

Le principe général de l'invention propose un système d'imagerie par balayage, par fluorescence par exemple, d'une surface d'au moins un échantillon qui peut être réalisé à partir d'un lecteur CD ou DVD classique, accessible à faible coût, et qui comprend à l'origine une tête de lecture laser et des moyens d'entraînement en rotation d'un disque CD ou DVD classique.

L'invention repose sur la duplication des signaux latéraux et de focalisation des actuateurs de la tête de lecture laser du support de stockage, vers une tête de mesure (ou de lecture) de la fluorescence du ou des échantillons, les deux têtes étant mécaniquement liées.

Il est à noter que la technique d'imagerie par balayage de l'invention ne met pas en oeuvre de microscope confocal.

Le mode de réalisation de l'invention décrit ci-après vise à obtenir une image d'au moins un échantillon biologique, qui se présente sous la forme d'un gel malléable, et à détecter dans cet échantillon la présence sporadique de bactéries d'une taille voisine de 1 µm (micromètre).

### 6.1 Support de lames

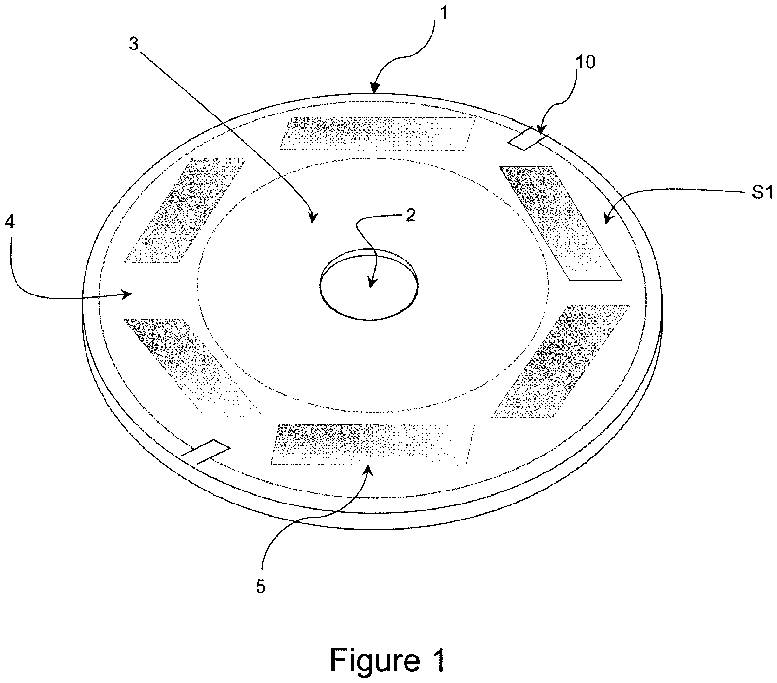

La figure 1 illustre un support circulaire de lames utilisé dans un mode de réalisation de l'invention. Le support est un disque optique 1, par exemple un CD (« Compact Disc » (marque déposée)) ou un DVD (« Digital Versatile Disc » (marque déposée)), constitué généralement de polycarbonate.

De manière classique, le disque 1 comprend en son centre un orifice circulaire 2, permettant son insertion sur un dispositif d'entraînement en rotation du disque 1.

La surface supérieure SI du disque 1 est divisée en deux zones concentriques :
- une zone 3 d'enregistrement de données servant à la lecture et/ou l'écriture de données qui est située vers le centre du disque 1, et
- une zone 4 de réception d'au moins une lame 5 portant un échantillon biologique (non représenté), qui est située à la périphérie du disque 1.

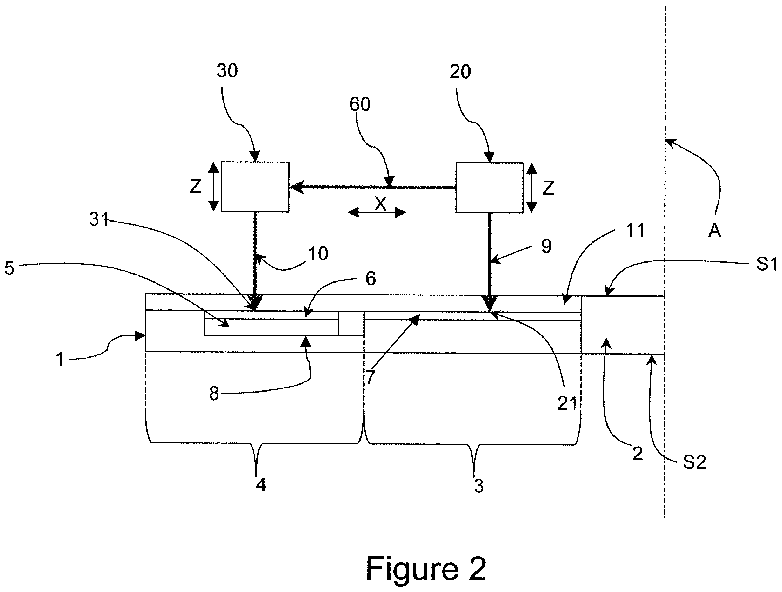

Dans ce mode de réalisation, plusieurs lames 5 peuvent être placées de façon amovible dans des cavités 8 (voir figure 2) du disque 1 qui sont situées dans la zone de réception 4. Ces lames 5 sont, par exemple, retenues dans les cavités 8 par des languettes flexibles (non représentées). Les lames 5 peuvent être en inox (de type AISI 304) ou en polycarbonate, et peuvent éventuellement être recouvertes d'une feuille d'aluminium pour pallier les difficultés liées à une trop grande transparence de la lame.

D'autres dispositions des lames 5 sur le disque 1 sont, bien entendu, envisageables.

Avant leur analyse, les échantillons biologiques disposés sur les lames 5 ont été marqués par une préparation fluorescente (fluorophore), par exemple un colorant commercial comme le « Alexa Fluor 488 » de Molecular Probes (marques déposées), dont la bande d'absorption peut se situer par exemple autour de 488 nm (nanomètre), la longueur d'onde de fluorescence se situant autour de 519 nm.

On distingue sur la figure 2, qui est une vue en coupe du disque 1, la couche de préparation fluorescente 6 déposée sur l'échantillon biologique de la lame 5 et une couche de métallisation 7 déposée sur la zone 3 d'enregistrement de données du disque 1.

L'épaisseur combinée de la couche de préparation fluorescente 6 et de la lame 5 sur laquelle l'échantillon est déposé peut être supérieure à la profondeur de la cavité 8. Dans ce cas, un film d'épaisseur calibrée (de l'ordre de quelques microns) peut être déposé sur le disque 1 partiellement métallisé. Ce film d'épaisseur calibrée (non représenté) comprend par exemple des ouvertures (en d'autres termes, le film est ajouré par endroits) destinées à découvrir presque totalement la lame 5 d'échantillon et permet d'écraser la préparation fluorescente 6 à une épaisseur connue (le film d'épaisseur calibrée possède donc des ouvertures à l'intérieur ou au moins aux abords desquels la préparation écrasée adopte la même épaisseur que le film), dépendant de la profondeur de champ souhaitée, contre la surface inférieure S2 du disque 1, et évite des problèmes dus à la profondeur de champ. Des orifices ou zones d'expansion (non représentés) peuvent être prévus dans les cavités 8, pour permette l'extrusion de l'excédent de préparation fluorescente 6 lorsque celle-ci est écrasée par la surface de compression du film ajouré. La surface de compression est par exemple retenue sur le disque 1 par des ergots de maintien 10, comme illustré sur la figure 1.

Une autre solution consiste à réaliser un gel d'épaisseur connue, l'échantillon biologique dans cet exemple se présentant sous la forme d'un gel malléable. Pour ce faire, on dispose dans le gel des billes de diamètre calibré de quelques micromètres, non déformables et transparentes, de matériau non fluorescent. La compression du « gel » de l'échantillon s'effectue jusqu'à ce que les surfaces de compression entrent en contact avec les billes non déformables. Dans chaque cas, il faut prévoir des zones d'expansion du gel.

Il est à noter que la référence 11 et la métallisation 7 présentent une surface commune qui sert de surface référence. Ainsi donc, on utilisera de préférence comme surface de référence la surface se situant dans le prolongement du dépôt métallisé 7 constituant la surface lisible du CD. Dans le cas d'un DVD, il s'agit d'une surface accessible, parallèle au prolongement de la métallisation de lecture.

La métallisation comporte en outre classiquement l'inscription de tous les signaux de guidage-synchronisation du CD/DVD 1, ainsi que d'éventuelles données utilisables dans le cadre de l'invention, telles que décrites ci-après.

### 6.2 Système d'imagerie par fluorescence des lames

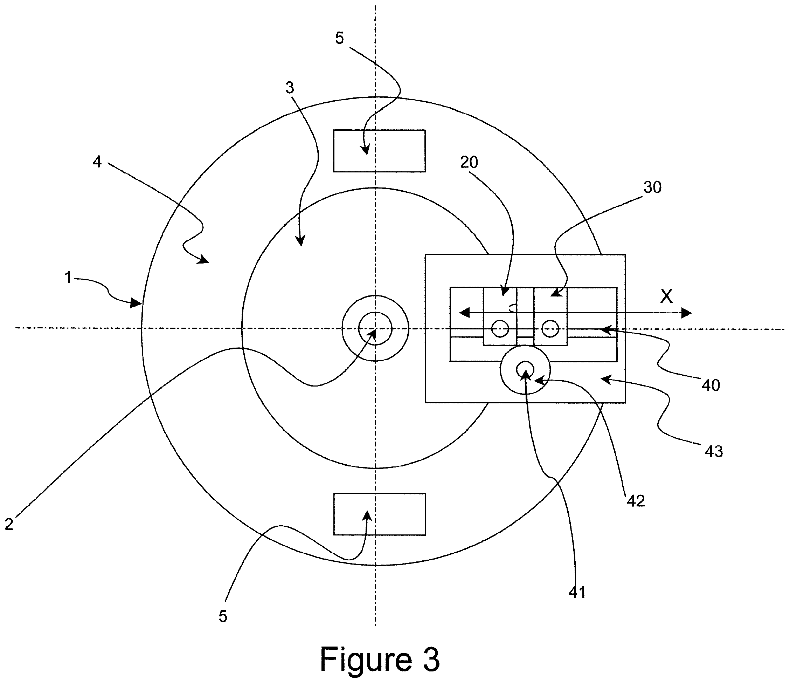

La figure 3 représente schématiquement le disque 1 décrit précédemment, lorsqu'il est inséré dans un lecteur CD/DVD modifié conformément à l'invention.

Le disque 1 peut être mis en rotation autour d'un axe A par un moteur du lecteur CD/DVD, à vitesse constante ou variable.

Le lecteur CD/DVD modifié selon l'invention comprend une première tête de lecture 20 et une deuxième tête de mesure de la fluorescence 30 qui sont logées dans un bâti 43 fixe situé au-dessus du disque 1, et qui sont solidaires. Les deux têtes 20, 30 peuvent se déplacer radialement (direction référencée « X » sur la figure 3) et verticalement (direction référencée « Z » sur la figure 2) par rapport au disque 1.

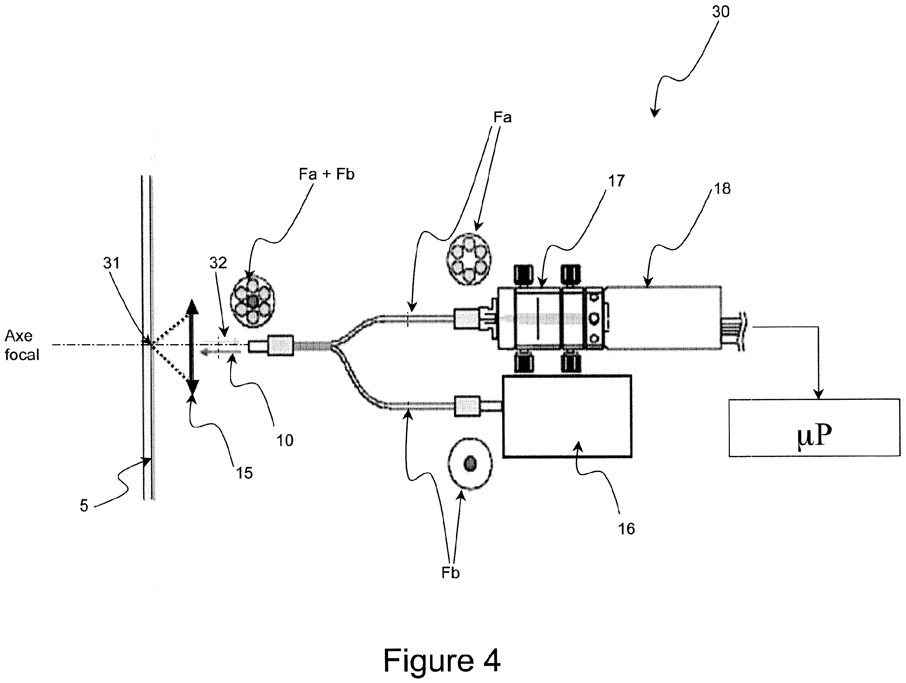

La tête de lecture 20 comprend, de manière classique, une diode laser apte à émettre un faisceau lumineux, une optique comprenant au moins un miroir ou lentille de focalisation du faisceau lumineux émis sur la zone de données 3 du disque 1, et une diode photoélectrique apte à détecter le signal réfléchi par la surface de la zone de données 3 en réponse à l'excitation lumineuse. Les signaux détectés par la diode photoélectrique peuvent être traités par des moyens de traitement, référencés « µP » sur la figure 4.

Le faisceau lumineux 9 issu de la tête de lecture 20 du disque 1 et le faisceau lumineux 10 issu de la tête de mesure de la fluorescence 30 (pour l'analyse des lames) sont représentés sur la figure 2. Le signal de fluorescence émis par l'échantillon biologique en réponse à l'excitation lumineuse 10 et le signal réfléchi par la surface de la zone de données 3 n'ont en revanche pas été représentés.

La surface des échantillons biologiques des lames 5 est balayée point par point par le faisceau lumineux 10 issu de la tête de mesure de la fluorescence 30 par entraînement en rotation du disque 1 et par translation des deux têtes 20, 30.

Les deux têtes 20, 30 étant solidaires, elles sont donc guidées simultanément en translation sur des moyens de guidage 40 du bâti 43, par un système classique d'entraînement, commandé par le lecteur CD/DVD, comprenant un pignon 41 et une roue dentée 42.

Plus précisément, la tête de mesure de la fluorescence 30 comprend une source d'excitation lumineuse, qui peut être une diode laser ou une diode électroluminescente LED par exemple, émettant un faisceau lumineux 10 de la fraction de milliwatts (mW) à quelques milliwatts de puissance (de préférence ajustable selon la vitesse de rotation du disque 1) à une longueur d'onde correspondant à l'excitation des fluorophores utilisés typiquement (dans ce cas de l'ordre de 488 nm).

La tête de mesure de la fluorescence 30 comprend en outre une optique comprenant au moins une lentille de focalisation (référencé 15 sur la figure 4) du faisceau lumineux émis et des moyens de détection de la fluorescence émise par les lames 5 (référencée 32 sur la figure 4), dans une bande étroite de longueurs d'onde, en réponse à l'excitation lumineuse 10. Ces moyens de détection peuvent comprendre un ou plusieurs capteurs (de type photomultiplicateur, photodiode, CDD ou CMOS) capables de générer un signal électrique fonction de la quantité de fluorescence détectée. Les signaux générés lors du balayage des échantillons biologiques disposés sur les lames 5 par la tête de mesure de la fluorescence 30 peuvent être traités par des moyens de traitement (référencés « µP » sur la figure 4) pour obtenir une image de la surface des échantillons, et détecter la présence éventuelle de bactéries dans ces échantillons.

La taille (ou diamètre) de la tache (ou « spot » en anglais) du faisceau lumineux 10 sur la surface des échantillons biologiques est de préférence contrôlée pour assurer la résolution souhaitée de la zone à balayer. L'intensité du faisceau lumineux 10 peut être ajustée en fonction de la réponse à l'excitation, pour augmenter le rapport signal/bruit. Un compromis est également nécessaire entre la longueur d'onde, la surface de la tache et la profondeur de champ.

Il est en outre important, pour que l'image obtenue soit nette, que la surface des échantillons biologiques soit constamment dans le plan focal de la tête de mesure de la fluorescence 30.

Le système de l'invention prend donc en compte les variations prévisibles de hauteur (selon la direction Z) entre le point de focalisation 21 de la tête de lecture 20 sur la zone 3 d'enregistrement de données du disque 1 et le point de focalisation 31 de la tête de mesure de la fluorescence 30 sur la surface des échantillons biologiques, comme représenté sur la figure 2. Du fait de la rigidité du matériau (polycarbonate dans cet exemple) du disque 1, les irrégularités de la surface SI du disque 1, qui peuvent êtres dues à une courbure du disque 1, sont supposées identiques, ou du moins prévisibles, sur tout le rayon du disque 1, à partir d'une mesure prise à l'endroit de la tête de lecture 20.

On peut appliquer une commande d'autofocus (appelé complément d'autofocus) à la tête de mesure de la fluorescence 30 pour compenser ces irrégularités. Cette commande peut être effectuée en asservissant au moyen des cales piézoélectriques la position de la fibre véhiculant la puissance lumineuse d'excitation selon la direction Z. Un ajustement statique de la position de la fibre véhiculant la puissance lumineuse d'excitation selon les directions X et/ou Y peut également être effectué. Ce complément d'autofocus peut être réalisé de manière confocale sur la fibre d'excitation.

Selon l'invention, la correction d'autofocus calculée par la tête de lecture 20 du disque 1 pour compenser les irrégularités de la surface SI sert également à compenser les mêmes irrégularités pour la lecture de la fluorescence. Les signaux d'autofocus de la tête de lecture 20 sont donc dirigés tels quels (flèche 60 de la figure 2) vers la tête de mesure de la fluorescence 30, si bien que la profondeur de champ de la tête de mesure de la fluorescence 30 n'a pas à être contrôlée.

En d'autres termes, les défauts de planéité de la surface supérieure SI du disque 1 sont compensés en dupliquant les signaux de commande d'autofocus (signaux de focalisation) de la tête de lecture 20 sur la tête de mesure de la fluorescence 30, après les avoir éventuellement amplifiés.

En complément des signaux d'asservissement de focalisation 60 (selon l'axe focal), les signaux d'asservissement latéral de la tête de lecture 20 sont dupliqués (flèche 60) vers la tête de mesure de la fluorescence 30, pour assurer également un pointage latéral identique des deux optiques (on parlera par la suite de premier étage d'autofocus). Le mouvement des deux têtes 20, 30 étant réalisé en pas-à-pas, la linéarisation du mouvement des têtes 20, 30 est obtenu par contrôle radial des lentilles de focalisation respectives des têtes de lecture 20 et de mesure 30.

Dans un mode préférentiel de réalisation, pour que la duplication de signaux soit efficace en termes de focalisation, la zone de données 3 et la zone de support d'échantillons 4 sont référencées par rapport à la surface inférieure S2 du disque 1 qui est supposée plane ou qui présente des variations de hauteur de faible fréquence spatiale.

### 6.3 Tête de mesure de la fluorescence

La figure 4 illustre, de manière schématique, un mode de réalisation de la tête de mesure de la fluorescence 30. Le faisceau lumineux 10 émis par la source laser 16 de la tête de mesure de la fluorescence 30 peut être acheminé par une fibre optique Fb jusqu'à une lentille de focalisation 15 qui permet de concentrer le faisceau lumineux 10 sous la forme d'un « spot » 31 sur la surface de l'échantillon biologique (non représenté) disposé sur la lame 5. La fluorescence 32 émise par l'échantillon biologique en réponse à l'excitation lumineuse 10 peut être recueillie via cette même lentille 15, par un jeu de fibres optiques Fa, et acheminée ensuite vers un système comprenant un ou plusieurs filtres 17 et un détecteur 18 de type photomultiplicateur (PMT) par exemple. Un tel photomultiplicateur est capable de générer des signaux électriques fonction de la quantité de fluorescence 30 détectée. Ces signaux peuvent être traités par des moyens de traitement µP pour obtenir une image 2D et/ou 3D de la surface de l'échantillon de la lame 5, et détecter la présence éventuelle de bactéries dans cet échantillon.

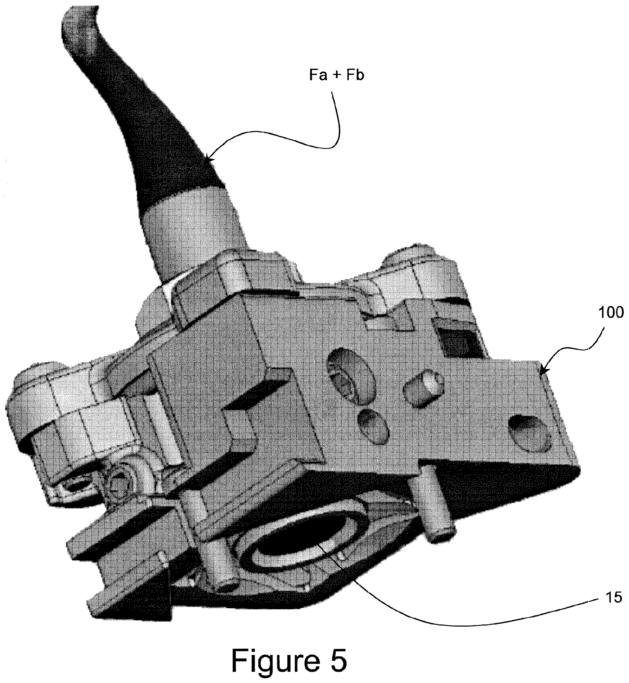

La figure 5 est une vue de dessous, en perspective, de la tête de mesure de la fluorescence 30 selon un mode particulier de réalisation. On distingue sur cette figure la plaque support 100 d'origine d'une tête de lecture laser sur laquelle est montée la lentille de focalisation 15. Un câble Fa+Fb comprenant les fibres optiques Fa et Fb est monté de manière amovible sur cette plaque support 100.

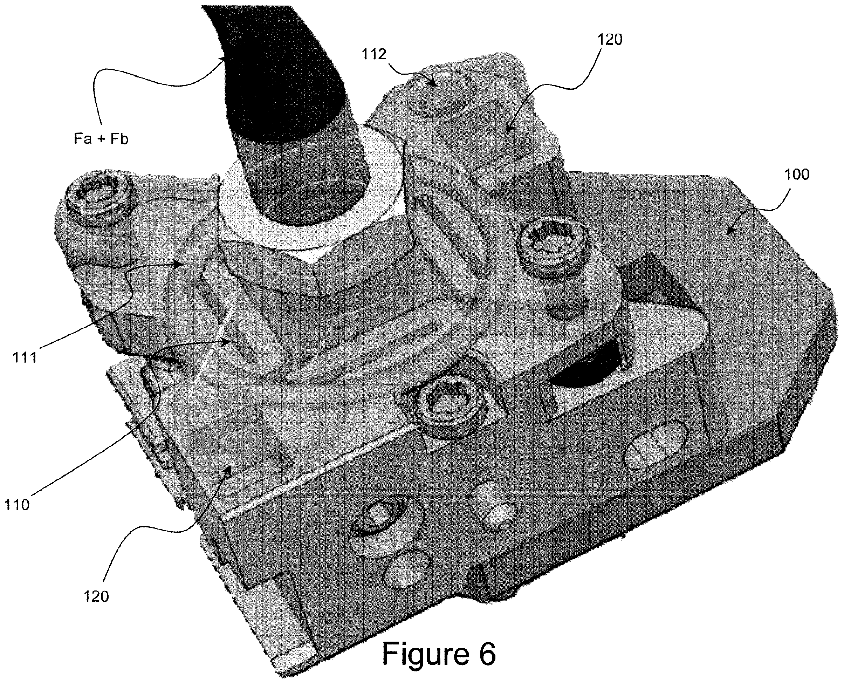

La figure 6 représente cette même tête de mesure de la fluorescence 30 en vue de dessus. Le câble de fibres optiques Fa+Fb est maintenue sur la plaque support 100 par plusieurs éléments de fixation 112 tels que des vis, le maintien en position du câble étant assuré par quatre éléments de centrage 110 et un joint d'élasticité 111.

Un complément d'autofocus (que l'on appellera également deuxième étage d'autofocus) peut être appliqué à la tête de tête de mesure de la fluorescence 30. Ce complément peut être effectué en asservissant au moyen des cales piézoélectriques, disposées dans des logements 120, la position de la fibre véhiculant la puissance lumineuse d'excitation selon la direction Z.

Un ajustement statique de la position de la fibre véhiculant la puissance lumineuse d'excitation selon les directions X et/ou Y peut également être effectué.

### 6.4 Actuateurs de focalisation

Comme souligné précédemment, les signaux d'autofocus en X, Y et Z de la tête de lecture 20 sont dupliqués (flèche 60) vers la tête de mesure de la fluorescence 30. Ces signaux d'autofocus sont appliqués aux actuateurs de focalisation classiques (non représentés) de la tête de mesure de la fluorescence 30, qui comprennent au moins la lentille de focalisation 15, et qui permettent le déplacement de la tête de mesure de la fluorescence 30 selon les directions X, Y et/ou Z.

Par ailleurs, la couche de métallisation 7 déposée sur la zone 3 d'enregistrement de données du disque 1 peut constituer une surface de référence, ainsi que de suivi de la « spirale » des informations, pour l'asservissement de l'optique de focalisation. Ceci est réalisé avec une simple lecture continue de CD (pas de saut de plage, quel que soit le type d'informations).

Des informations de référencement peuvent être gravées sur la zone 3 du disque 1, pour identifier le jeu de lames qui y est attaché.

Des informations caractérisant l'analyse des lames disposées sur le disque peuvent également être gravées sur la zone 3. On pourra ainsi stocker sur le disque la date et l'heure de l'analyse, le résultat de l'analyse (positif lorsque des bactéries sont détectées ou négatif dans le cas contraire), etc.

De même, il est envisagé de pré-caractériser les disques dans des conditions de laboratoire (pas de désaxement dans ces conditions), lors de la fabrication du disque par exemple, et de stocker dans la zone de données 3 des informations représentatives de certains types de défauts non évolutifs (variation d'épaisseur du disque optique par exemple).

Cette phase de pré-caractérisation du disque, par exemple son épaisseur optique au niveau de la tête de lecture de fluorescence, peut être effectuée par interférométrie de type Fizeau. Ces informations sont lues par la tête de lecture 20 et transmises vers la tête de mesure de la fluorescence 30. Elles peuvent alors servir à renseigner le premier étage d'autofocus et/ou le système de complément d'autofocus (deuxième étage d'autofocus) de la tête de mesure de la fluorescence 30, qui compare le signal de focalisation réellement appliqué à la tête de lecture avec celui stocké, et en déduit et compense la présence d'éventuels défauts de positionnement du disque 1. Cette compensation peut s'effectuer par modification du signal de focalisation (premier étage d'autofocus), et/ou par exemple au moyen des cales piézo-électriques mentionnées auparavant (deuxième étage d'autofocus).

### 6.5 Variantes

Ainsi donc, dans l'application décrite ci-dessus à titre d'exemple, le système de l'invention permet de détecter et de dénombrer les micro-organismes dans des échantillons biologiques dans des délais courts, de l'ordre de 3 ou 4 heures par exemple, et d'en tirer une information sur la contamination d'une carcasse animale.

Le système de l'invention peut être utilisé pour balayer un échantillon en profondeur (selon Z) et ainsi obtenir une image en 3D de l'échantillon. Un tel balayage nécéessite toutefois de moduler le signal de focalisation et/ou d'utiliser des vitesses de rotation du disque plus lentes et/ou d'effectuer plusieurs passages successifs en confocal, en faisant varier la focalisation du faisceau lumineux.

Un tel système pourra être mis en œuvre en parallèle d'un système automatique de prélèvement d'échantillons biologiques par impaction, de marquage des échantillons par fluorescence et d'archivages des lames support d'échantillon.

Un tel système peut être utilisé par les industriels et les organismes de contrôle des risques alimentaires, et constitue une alternative aux méthodes de contrôle basées sur la sérologie des animaux ou bactériologiques.

L'industriel ou l'organisme de contrôle utilisant le système de l'invention dispose ainsi d'un outil permettant de conditionner la viande, ou tout autre produit alimentaire, en fonction de l'information représentative de la contamination obtenue, sans ralentir le processus d'abattage ou de transformation.

Le principe de l'invention réduit en outre de façon importante le coût de fabrication des dispositifs d'imagerie par fluorescence, tels que ceux utilisés pour l'analyse d'échantillons biologiques.

Le système de l'invention peut également permettre l'imagerie de puces d'échantillons biologiques (« biochips » en anglais) même si la lecture de telles puces ne nécessite pas une résolution aussi élevée que pour des lames.

L'invention peut être mise en œuvre pour l'analyse biologique de produits industriels et de consommation (périssables et non-périssables), en particulier dans le domaine de la santé humaine et animale.

L'invention peut trouver des applications dans de nombreux domaines tels que, par exemple, l'agro-alimentaire (filière avicole, porcine, etc), la cosmétique, la pharmaceutique, l'environnement, la chimie des polymères (analyse des plastiques), le contrôle de surface des matériaux, etc.

Plus généralement, l'invention peut également être mis en œuvre pour l'analyse de tout échantillon plan, en éclairage direct et imagerie par réflexion-diffusion.

Dans le mode de réalisation décrit ci-dessus, l'angle d'incidence des faisceaux lumineux issus des têtes de lecture et de mesure de la fluorescence est nul. Il est toutefois envisageable de mettre en œuvre des têtes de lecture et de mesure avec un angle d'incidence non nul. Cependant,
- dans le cas de la fluorescence, il faut que la collecte soit suffisante, ce qui limite à des angles assez faibles ;
- dans le cas d'une détection confocale, le flux risque de décroître avec l'angle ;
- il convient en outre de respecter la géométrie optique de la tête de lecture originale.

Il est également envisageable d'utiliser comme support rotatif des lames d'autres types de disque optique, comme par exemple un disque Blu-Ray (marque déposée).

On envisage également l'utilisation d'autres formes de lames nécessitant des formes de cavités correspondantes dans le disque et d'autres supports biologiques que des lames. On pourra ainsi utiliser des films (en réflexion ou en fluorescence par exemple), à condition que ces films soient suffisamment solides pour ne pas être déformés par la force centrifuge due au mouvement en rotation du disque. L'utilisation de films peut nécessiter dans certains cas d'adapter la vitesse de rotation du disque et peut limiter le type d'échantillon à analyser.

Le système de balayage et d'autofocus de l'invention n'est pas dépendant du mode de lecture de l'échantillon. Ainsi, la lecture de l'échantillon peut être effectuée par tout type de source lumineuse d'excitation ou d'éclairage : éclairage incohérent (pas d'analyse par fluorescence possible dans ce cas, et préférentiellement en confocal ou en rétro-diffusion), confocal (en réflexion comme en fluorescence), par transmission (ceci nécessite par exemple un collecteur mobile de l'autre côté du disque qui suit le mouvement transverse des têtes 20 et 30), par réflexion, etc.

On envisage en outre d'utiliser différents types de fibres optiques (fibres multicoeurs, fibres à trous, etc) et d'autres moyens de collecte que des fibres optiques selon les applications envisagées.

## Revendications

1. Système d'imagerie par balayage d'une surface d'au moins un échantillon comprenant :
- un support (1) apte à être entraîné en rotation autour d'un axe (A), comprenant :
- une zone (3) de stockage de données ; et
- au moins un logement (8) de réception d'un échantillon ;
- un dispositif de lecture comprenant une première tête de lecture (20) des données stockées dans ladite zone (3) de stockage, comprenant des premiers moyens d'ajustement d'un premier faisceau lumineux (9),
ledit dispositif de lecture comprenant en outre :
- une deuxième tête de détection/mesure (30) de la lumière émise par l'échantillon sous l'action d'un deuxième faisceau lumineux (10) d'excitation,
et
- des deuxièmes moyens d'ajustement du deuxième faisceau lumineux (10) d'excitation pilotés par un signal de contrôle des premiers moyens d'ajustement du premier faisceau lumineux (9) de ladite première tête de lecture (20),
**caractérisé en ce que** la deuxième tête de détection/mesure comprend une fibre véhiculant la puissance lumineuse d'excitation et des cales piézo-électriques asservissant la position de cette fibre verticalement, selon la direction Z, par rapport au support (1).

2. Système selon la revendication 1, **caractérisé en ce que** les premiers et seconds moyens d'ajustement permettent d'ajuster la position du premier et du second point de focalisation (21, 31) respectivement selon l'axe focal des premiers et des seconds moyens optiques respectivement.

3. Système selon la revendication 2, **caractérisé en ce que** les premiers et seconds moyens d'ajustement permettent en outre d'ajuster la position du premier et du second point de focalisation (21, 31) respectivement dans une direction sensiblement perpendiculaire à l'axe focal des premiers et des seconds moyens optiques respectivement.

4. Système selon l'une quelconque des revendications 1 à 3, **caractérisé en ce que** la première tête de lecture (20) et la deuxième tête de détection/mesure (30) sont montés sur un support commun mobile en translation suivant une direction sensiblement perpendiculaire à l'axe (A) de rotation dudit support (1) lorsque le support (1) est entraîné en rotation.

5. Système selon l'une des revendications 1 à 4, **caractérisé en ce qu'**un film d'épaisseur calibrée est disposé sur la surface supérieure du support (1) de façon à écraser l'échantillon dans le logement (8) à une épaisseur connue par rapport à la surface inférieure du support (1).

6. Système selon l'une des revendications 1 à 5, **caractérisé en ce que** la deuxième tête de détection/mesure (30) est apte à détecter/mesurer la fluorescence émise par au moins un échantillon marqué par une préparation fluorescente en réponse à un faisceau lumineux d'excitation.

7. Système selon l'une des revendications 1 à 6, **caractérisé en ce que** le signal de contrôle des premiers moyens d'ajustement du premier faisceau lumineux de la première tête de lecture (20) tient compte d'au moins une information représentative d'au moins un type de défaut du support (1), tels que des variations d'épaisseur, mémorisées dans la zone (3) de stockage du support (1).

8. Dispositif de lecture d'un support (1) conçu pour être mis en œuvre dans un système d'imagerie par balayage d'une surface d'au moins un échantillon, le système comprenant un support (1) apte à être entraîné en rotation autour d'un axe (A) et comprenant :
- une zone (3) de stockage de données ; et
- au moins un logement (8) de réception d'un échantillon ;
le dispositif de lecture comprenant une première tête de lecture (20) des données stockées dans ladite zone (3) de stockage, comprenant des premiers moyens d'ajustement d'un premier faisceau lumineux (9),
ledit dispositif de lecture comprenant en outre :
- une deuxième tête de détection/mesure (30) de la lumière émise par l'échantillon sous l'action d'un deuxième faisceau lumineux (10) d'excitation,
et
- des deuxièmes moyens d'ajustement du deuxième faisceau lumineux (10) d'excitation pilotés par un signal de contrôle des premiers moyens d'ajustement du premier faisceau lumineux (9) de ladite première tête de lecture (20),
le dispositif de lecture étant **caractérisé en ce que** la deuxième tête de détection/mesure comprend une fibre véhiculant la puissance lumineuse d'excitation et des cales piézo-électriques asservissant la position de cette fibre verticalement, selon la direction Z, par rapport au support (1).

## Patentansprüche

1. System zur Bildgebung durch Scannen einer Oberfläche mindestens einer Probe, umfassend:
- einen Träger (1), der geeignet ist, um eine Achse (A) herum drehangetrieben zu werden, umfassend:
- einen Datenspeicherbereich (3); und
- mindestens eine Aufnahme (8) zum Aufnehmen einer Probe;
- eine Lesevorrichtung, die einen ersten Lesekopf (20) zum Lesen der im Speicherbereich (3) gespeicherten Daten umfasst, der erste Justagemittel zur Justage eines ersten Lichtstrahls (9) umfasst,
wobei die Lesevorrichtung ferner umfasst:
- einen zweiten Detektions-/Messkopf (30) zum Detektieren/Messen des von der Probe unter der Einwirkung eines zweiten Anregungslichtstrahls (10) emittierten Lichts,
und
- zweite Justagemittel zur Justage des zweiten Anregungslichtstrahls (10), die durch ein Steuersignal der ersten Justagemittel zur Justage des ersten Lichtstrahls (9) des ersten Lesekopfes (20) angesteuert werden,
**dadurch gekennzeichnet, dass** der zweite Detektions-/Messkopf eine Faser umfasst, welche die Anregungslichtleistung überträgt, und piezoelektrische Positionierer, welche die Position dieser Faser vertikal entlang der Richtung Z in Bezug auf den Träger (1) regulieren.

2. System nach Anspruch 1, **dadurch gekennzeichnet, dass** die ersten und zweiten Justagemittel es ermöglichen, die Position des ersten und des zweiten Fokussierungspunktes (21, 31) jeweils entlang der Fokusachse der jeweiligen ersten und zweiten optischen Mittel zu justieren.

3. System nach Anspruch 2, **dadurch gekennzeichnet, dass** die ersten und zweiten Justagemittel es ferner ermöglichen, die Position des ersten und des zweiten Fokussierungspunktes (21, 31) jeweils in einer Richtung zu justieren, die senkrecht zur Fokusachse der jeweiligen ersten und zweiten optischen Mittel verläuft.

4. System nach einem der Ansprüche 1 bis 3, **dadurch gekennzeichnet, dass** der erste Lesekopf (20) und der zweite Detektions-/Messkopf (30) an einem gemeinsamen Träger montiert sind, der entlang einer im Wesentlichen senkrecht zur Drehachse (A) des Trägers (1) verlaufenden Richtung translatorisch beweglich ist, wenn der Träger (1) drehangetrieben wird.

5. System nach einem der Ansprüche 1 bis 4, **dadurch gekennzeichnet, dass** eine Folie von kalibrierter Dicke auf der oberen Fläche des Trägers (1) so angeordnet ist, dass die Probe in der Aufnahme (8) auf eine bekannte Dicke in Bezug auf die untere Fläche des Trägers (1) zusammengedrückt wird.

6. System nach einem der Ansprüche 1 bis 5, **dadurch gekennzeichnet, dass** der zweite Detektions-/Messkopf (30) geeignet ist, die Fluoreszenz zu detektieren/messen, die von mindestens einer durch eine Fluoreszenzvorbereitung markierten Probe als Antwort auf einen Anregungslichtstrahl emittiert wird.

7. System nach einem der Ansprüche 1 bis 6, **dadurch gekennzeichnet, dass** das Steuersignal der ersten Justagemittel zur Justage des ersten Lichtstrahls des ersten Lesekopfes (20) mindestens eine für mindestens eine Fehlerart des Trägers (1), wie beispielsweise Dickenschwankungen, repräsentative Information berücksichtigt, die im Speicherbereich (3) des Trägers (1) gespeichert ist.

8. Lesevorrichtung zum Lesen eines Trägers (1), die dazu ausgelegt ist, in ein System zur Bildgebung durch Scannen einer Oberfläche mindestens einer Probe eingesetzt zu werden, wobei das System einen Träger (1) umfasst, der geeignet ist, um eine Achse (A) herum drehangetrieben zu werden, und der umfasst:
- einen Datenspeicherbereich (3); und
- mindestens eine Aufnahme (8) zum Aufnehmen einer Probe;
wobei die Lesevorrichtung einen ersten Lesekopf (20) zum Lesen der im Speicherbereich (3) gespeicherten Daten umfasst, der erste Justagemittel zur Justage eines ersten Lichtstrahls (9) umfasst,
wobei die Lesevorrichtung ferner umfasst:
- einen zweiten Detektions-/Messkopf (30) zum Detektieren/Messen des von der Probe unter der Einwirkung eines zweiten Anregungslichtstrahls (10) emittierten Lichts,
und
- zweite Justagemittel zur Justage des zweiten Anregungslichtstrahls (10), die durch ein Steuersignal der ersten Justagemittel zur Justage des ersten Lichtstrahls (9) des ersten Lesekopfes (20) angesteuert werden,
wobei die Lesevorrichtung **dadurch gekennzeichnet ist, dass** der zweite Detektions-/Messkopf eine Faser umfasst, welche die Anregungslichtleistung überträgt, und piezoelektrische Positionierer, welche die Position dieser Faser vertikal entlang der Richtung Z in Bezug auf den Träger (1) regulieren.

## Claims

1. Imaging system using the scanning of a surface of at least one sample comprising:
- a support (1) capable of being driven in rotation about an axis (A), comprising:
- a data storage area (3); and
- at least one housing (8) for receiving a sample;
- a reading device comprising a first reading head (20) for reading the data stored in said storage area (3), comprising first means for adjusting a first light beam (9),
said reading device further comprising:
- a second head for the detecting/measurement of (30) the light emitted by the sample under the action of a second excitation light beam (10),
- and second means for adjusting the second excitation light beam (10) driven by a control signal of the first means for adjusting the first light beam (9) of said first reading head (20),
**characterised in that** the second detection/measurement head comprises a fibre conveying the excitation light power and piezoelectric shims controlling the position of this fibre vertically, in the Z direction, in relation to the support (1).

2. System according to claim 1, **characterised in that** the first and second adjusting means allow for the adjustment of the position of first and second focusing points (21, 31) respectively along the focal axis of the first and second optical means respectively.

3. System according to claim 2, **characterised in that** the first and second adjustment means additionally allow for the adjustment of the position of the first and the second focusing point (21, 31) respectively in a direction substantially perpendicular to the focal axis of the first and second optical means respectively.

4. System according to any one of claims 1 to 3, **characterised in that** the first reading head (20) and the second detection/measurement head (30) are mounted on a common support translationally movable in a direction substantially perpendicular to the axis (A) of rotation of said support (1) when the support (1) is rotationally driven.

5. System according to one of claims 1 to 4, **characterised in that** a film of calibrated thickness is arranged on the upper surface of the support (1) so as to crush the sample in the housing (8) to a known thickness relative to the lower surface of the support (1).

6. System according to one of claims 1 to 5, **characterised in that** the second detection/measurement head (30) is capable of the detection/measurement of the fluorescence emitted by at least one sample labelled with a fluorescent preparation in response to an excitation light beam.

7. System according to one of claims 1 to 6, **characterised in that** the control signal of the first means for adjusting the first light beam of the first reading head (20) takes into account at least one item of information representative of at least one type of defect in the support (1), such as variations in thickness, stored in the storage area (3) of the support (1).

8. Device for reading a support (1) designed for use in an imaging system using the scanning of a surface of at least one sample, wherein the system comprises a support (1) capable of being rotationally driven about an axis (A) and comprising:
- a data storage area (3); and
- at least one housing (8) for receiving a sample;
wherein the reading device comprises a first reading head (20) for reading the data stored in said storage area (3), comprising first means for adjusting a first light beam (9), said reading device further comprising:
- a second head (30) for the detection/measurement of the light emitted by the sample under the action of a second excitation light beam (10),
and
- second means for adjusting the second excitation light beam (10) driven by a control signal of the first means for adjusting the first light beam (9) of said first reading head (20),
wherein the reading device is **characterised in that** the second detection/measurement head comprises a fibre conveying the excitation light power and piezoelectric shims controlling the position of this fibre vertically, in the Z direction, in relation to the support (1).
